# EUROPEAN PATENT APPLICATION

(11) **EP 4 764 858 A1**
(43) Date of publication of application: **24.06.2026**
(21) Application number: 25217693.8
(22) Date of filing: 21.11.2025
(51) Int. Cl.: G06F 9/50, G06F 9/54, G06F 11/30, G06F 11/362

(54) **FRAMEWORK TO PROVIDE API RESOURCE CONSUMPTION VISIBILITY AT EACH STACK FRAME LEVEL**

(30) Priority: 20.12.2024 US 202418990602
(71) Applicant: Microsoft Technology Licensing, LLC, Redmond, WA 98052-6399 (US)
(72) Inventor: MUTHA, Akshay N, Redmond, 98052-6399 (US); MOULHAUD, Patrick, Redmond, 98052-6399 (US); KAKHANDIKI, Abhishek Anil, Redmond, 98052-6399 (US); RODRIGUEZ, Eric P, Redmond, 98052-6399 (US); MUNOT, Aditya Rajkumar, Redmond, 98052-6399 (US); KIM, Minjeong, Redmond, 98052-6399 (US)
(74) Representative: Page White Farrer

(57) **Abstract**

Example implementations relate to methods, apparatuses, and computer-readable media for providing application programming interface (API) resource consumption visibility at each stack frame level. A monitoring application captures a record of service telemetry for incoming API calls to a cloud service for a window of time. The monitoring application captures a trace of processes running on at least one computer server that processes the API calls for the window of time. The monitoring application determines, for each API call, a start time and a stop time of the API call, a server that executed the API call, and a process identifier (PID) associated with the API call. The monitoring application generates a metric of resource consumption for each API call based on the trace of processes for the PID associated with the API call. The monitoring application initiates an action to reduce resource usage.

## Description

### BACKGROUND

Cloud services provide application programming interfaces (APIs) for performing various operations. Every API call to a cloud service goes through a code base associated with the API operation and performs specific tasks. During the journey from when the API call landed on the web server until the API call is returned to the user with the response, the API call goes through numerous methods, functions, classes, and namespaces.

The implementation of an API within a cloud service may be always changing because engineers may constantly update the methods, functions, classes, and namespaces. During these updates new methods get added, removed, or updated, so the call stack may change. It is very difficult for an engineer to figure out exactly what has changed in an API call, by just looking at the code because the code could be hundreds, thousands or even millions of lines of code that are executed during an API call.

Accordingly, there is a need for tools to manage and maintain implementations of API calls for large scale cloud services.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects, the techniques described herein relate to an apparatus including: one or more memories storing computer executable instructions; and one or more processors configured to execute the instructions to cause the apparatus to: capture a record of service telemetry for incoming application programming interface (API) calls to a cloud service for a window of time; capture a trace of processes running on at least one computer server that processes the API calls for the window of time, determine, for each API call, a start time and a stop time of the API call, a server that executed the API call, and a process identifier (PID) associated with the API call; generate a metric of resource consumption for each API call based on the trace of processes for the PID associated with the API call; and initiate an action to reduce resource usage.

In some aspects, the techniques described herein relate to a method including: capturing a record of service telemetry for incoming application programming interface (API) calls to a cloud service for a window of time; capturing a trace of processes running on at least one computer server that processes the API calls for the window of time, determining, for each API call, a start time and a stop time of the API call, a server that executed the API call, and a process identifier (PID) associated with the API call; generating a metric of resource consumption for each API call based on the trace of processes for the PID associated with the API call; and initiating an action to reduce resource usage.

In some aspects, the techniques described herein relate to an non-transitory computer-readable medium storing computer-executable instructions that, when executed by a processor, cause the processor to: capture a record of service telemetry for incoming application programming interface (API) calls to a cloud service for a window of time; capture a trace of processes running on at least one computer server that processes the API calls for the window of time, determine, for each API call, a start time and a stop time of the API call, a server that executed the API call, and a process identifier (PID) associated with the API call; generate a metric of resource consumption for each API call based on the trace of processes for the PID associated with the API call; and initiate an action to reduce resource usage.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Figure 1 is a diagram of an example of an architecture for a system to monitor resource usage in a cloud network, in accordance with aspects described herein.
Figure 2 is a diagram of an example of telemetry data for a cloud service providing an API, in accordance with aspects described herein.
Figure 3 is a diagram of an example process trace on a server, in accordance with aspects described herein.
Figure 4 is an example graph of a resource usage metric for an API over time, in accordance with aspects described herein.
Figure 5 is a schematic diagram of an example of an apparatus (e.g., a computing device) for generating resource usage metrics for API calls.
Figure 6 illustrates an example of a user device that allows a user 105 to access a monitoring application, in accordance with aspects described herein..
Figure 7 is a flow diagram of an example of a method for providing API expense visibility at each stack frame level.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known components are shown in block diagram form in order to avoid obscuring such concepts.

This disclosure describes various examples related to monitoring resource usage associated with an API call at a cloud service. The disclosure provides a system that captures what exactly is happening while this API call is running on the server and documents all the resources which are spent during that time on processing the API call. The records of resource usage may be analyzed to determine metrics for each API call. The metric may be monitored over time to create a trend over the period of time to understand the costs of the API and how the costs are changing day over day over the period of period of time. This information can give engineers and service owners visibility into not only how much is being spent at an overall level, but also at what is contributing to costs at the level of methods, namespaces and classes.

In an aspect, the present disclosure provides methods, apparatuses, and computer-readable media for monitoring resource usage of API calls. For example, in some implementations, a monitoring application may be executed on a server that receives and distributes API calls in a cloud environment. The monitoring application may capture a record of service telemetry for incoming API calls to a cloud service for a window of time. The monitoring application may capture a trace of processes running on at least one computer server that processes the API calls for the window of time. The monitoring application may determine, for each API call, a start time and a stop time of the API call, a server that executed the API call, and a process identifier (PID) associated with the API call. The monitoring application may generate a metric of resource consumption for each API call based on the trace of processes for the PID associated with the API call.

Implementations of the present disclosure may realize one or more of the following technical effects. First, monitoring of resource consumption for an API call over time provides metrics of resource consumption at the API call level. These metrics allow engineers to identify increases in resource usage and improve efficiency of complex software. Second, periodic monitoring of resource consumption within windows reduces resource consumption overhead of the monitoring system.

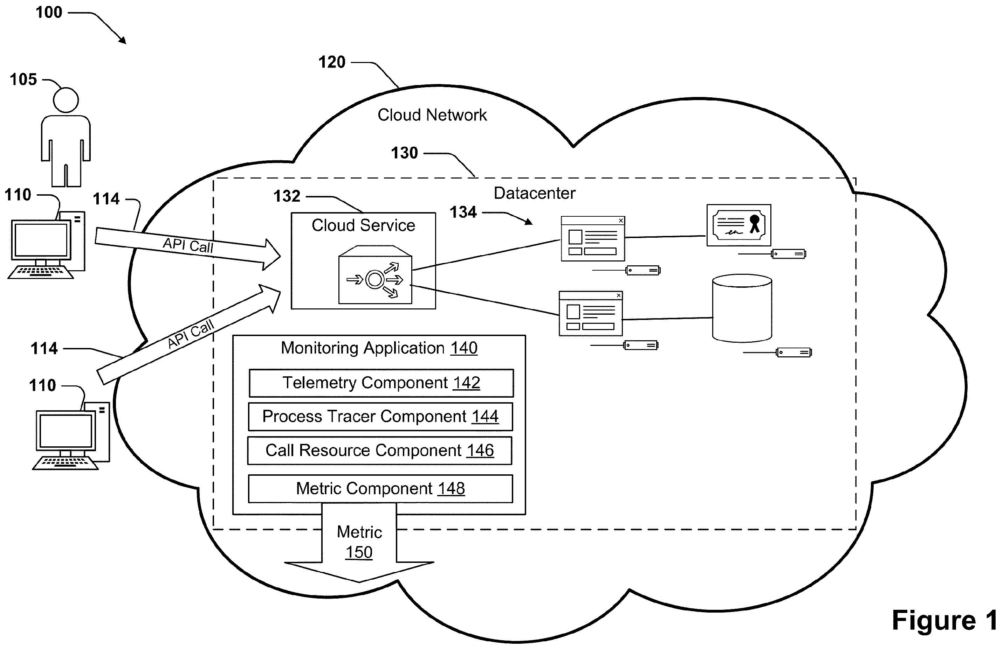

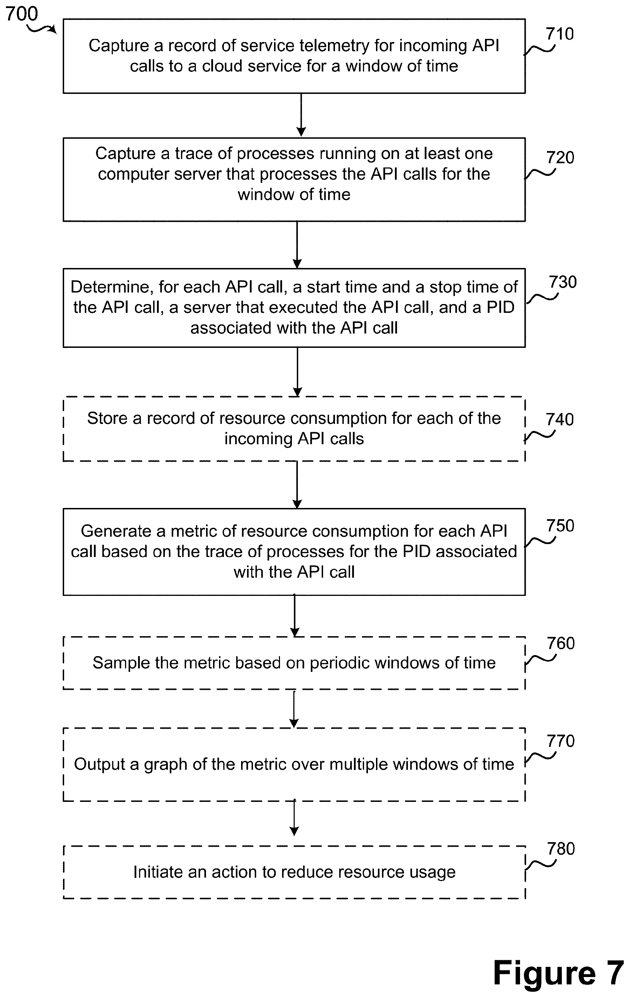

Turning now to Figures 1-7, examples are depicted with reference to one or more components and one or more methods that may perform the actions or operations described herein, where components and/or actions/operations in dashed line may be optional. Although the operations described below in Figure 7 are presented in a particular order and/or as being performed by an example component, the ordering of the actions and the components performing the actions may be varied, in some examples, depending on the implementation. Moreover, in some examples, one or more of the actions, functions, and/or described components may be performed by a specially-programmed processor, a processor executing specially-programmed software or computer-readable media, or by any other combination of a hardware component and/or a software component capable of performing the described actions or functions.

Figure 1 is a conceptual diagram 100 of an example of an architecture for monitoring resource usage in a cloud network. A cloud network 120 includes one or more datacenters 130 that provide a cloud service 132. For example, the cloud service 132 may include an application programming interface (API) that receives API calls 114 from client devices 110. The client device 110 may be, for example, end-user devices operated by users 105, servers that host other services, or other computing devices.

The cloud service 132 may be implemented by one or more servers 134 that execute a code stack for fulfilling the API call 114. For example, the servers 134 may include application servers, database servers, artificial intelligence (AI)/machine-learning (ML) model servers, security servers, etc. Each server may execute a plurality of processes, which may be executed as threads for sharing the processor cores. The cloud service 132 may include a load balancer that allocates incoming API calls 114 to different servers 134.

The monitoring application 140 is configured to capture API calls 114 and process traces on the cloud service 132 and the servers 134 to determine a metric 150 for an API call. The monitoring application 140 may include a telemetry component 142, a process tracer component 144, a call resource component 146 and a metric component 148.

The telemetry component 142 is configured to capture a record of service telemetry for incoming API calls 114 to the cloud service 134 for a window of time. For example, the service telemetry may include all of the API calls 114 made to the cloud service 132 during the window of time. The service telemetry may include information regarding communications related to API calls such as what API calls are received, a start time (or received time) and a stop time (or response time) of the API call. Further, the service telemetry may include information about how the cloud service 132 handled the API call. For example, the service telemetry may include an indication of a server that executed the API call and a process identifier (PID) associated with the API call.

In an aspect, the cloud service 132 may process a large number of requests and the record of service telemetry may include a large volume of data. Further, execution of the monitoring application 140 may utilize computing resources and impose an overhead on operation of the cloud service 132. By sampling the service telemetry during a window of time, the monitoring application 140 may reduce overhead outside of the window of time while still collecting enough examples of execution of an API call to determine representative metrics.

The process tracer component 144 is configured to capture a trace of processes running on at least one computer server 134 that processes the API calls for the window of time. For example, the trace of processes may include a call stack for the API call. The call stack may include multiple events. The trace of processes may include a thread execution time for each event. For instance, the events may include API calls to other services, methods, functions, etc. Further, events may be associated with namespaces and/or classes. The trace of processes may include methods, classes and namespaces being executed or any context switches being performed. For example, context switches might be required for garbage collection and other background processes on the cloud server. The traces of processes may include additional information about resources associated with each process. For example, the trace may include memory allocation, CPU cycles, wait duration, etc. Similar to the telemetry component 142, the process tracer component 144 may sample information during the window of time to reduce resource usage compared to constantly capturing traces.

The call resource component 146 is configured to determine, for each API call, a start time and a stop time of the API call, a server that executed the API call, and a PID associated with the API call. For example, the call resource component 146 may obtain the start time and stop time from the record of service telemetry. The call resource component 146 may obtain the server and the PID from the records of the cloud service 132. The call resource component 146 may correlate the API calls with resource usage information from the trace of processes based on the timing information and the server and PID information. For example, the call resource component 146 may associate the API call with a call stack and resources for executing the call stack for a server and PID combination based on the timing information for the API call. The call resource component 146 may be further configured to store a record of resource consumption for each of the incoming API calls.

The metric component 148 is configured to generate a metric of resource consumption for each API call based on the trace of processes for the PID associated with the API call. For example, the metric component 148 may generate the metric based on all resource associated with the API call via the PID. Example metrics of resource consumption include CpuCycles, WaitDuration, Memory allocated, etc. The metric component 148 may be further configured to sample the metric based on periodic windows of time. For instance, the monitoring application 140 may capture service telemetry and trace data for multiple windows of time, and the metric component 148 may output the metric for each window of time. The metric component 148 may be further configured to output a graph of the metric over multiple windows of time. In some implementations, the call stack for an API call changes between the windows of time, and the graph may be useful for understanding how the changes to the call stack affect resource consumption.

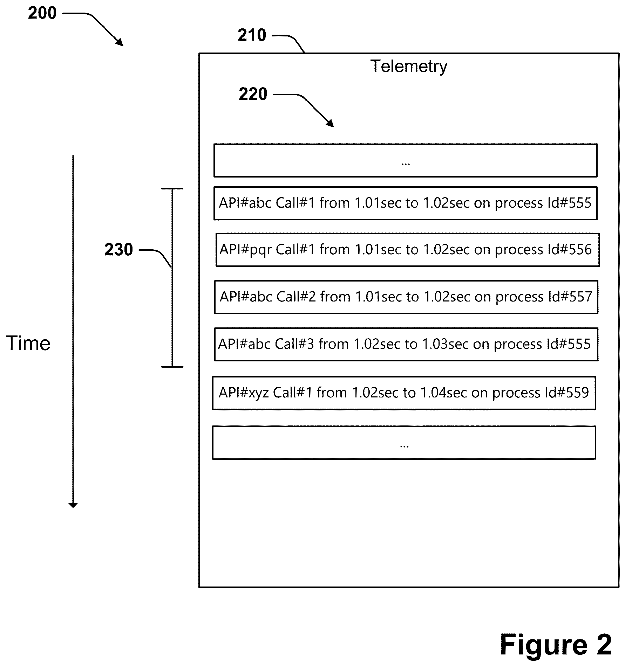

Figure 2 is a diagram 200 of an example of telemetry data 210 for a cloud service providing an API. The telemetry data 210 may include information for API calls 220 received at the cloud service 132. For example, the telemetry data 210 for each API call 220 may include an API identifier, an API call number, a start time, an end time or duration, and a PID. For instance, the start time may be a time stamp when the API call is received via a network interface. The end time may be a time stamp of when a response to the API call is transmitted via a network interface. In some implementations, an end time stamp may be calculated based on a duration or vice versa. In some implementations, the telemetry data 210 may include a server identifier (e.g., if the server is not indicated by the PID).

In an aspect, the telemetry data 210 may be collected for a window of time 230. For instance, the window of time 230 may be a relatively short duration of time (e.g., 1 or 2 minutes). The window of time 230 may occur periodically (e.g., daily, hourly). In some implementations, the API calls collected during the window of time 230 may include those API calls that are completed within the window of time. For instance, API calls with a start time before the window of time 230 or an end time after the window of time 230 may be excluded, for example, because data may be incomplete.

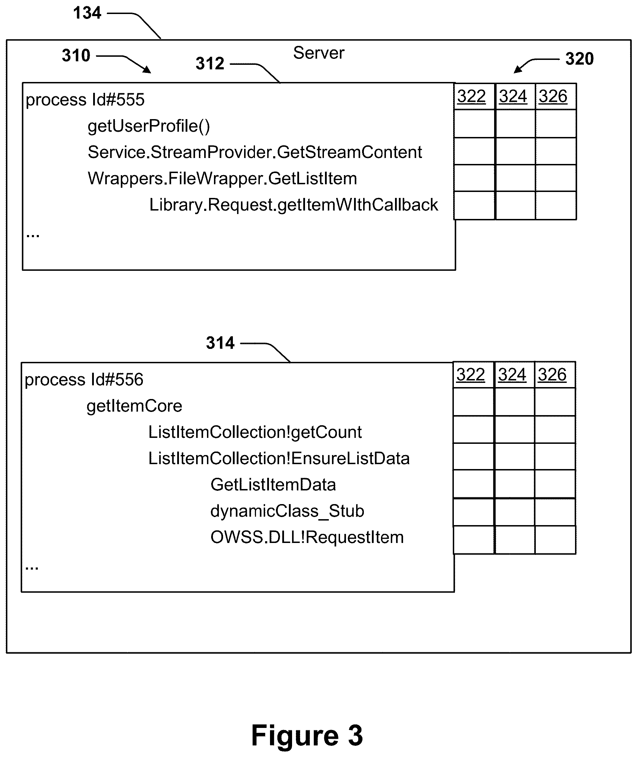

Figure 3 is a diagram 300 of an example process trace 310 on a server 134. A process trace may be executed on a hardware server to provide information about processes executed on the server. For example, the process trace 310 may include data for a plurality of frames during the window of time 230, the data indicating an activity of each PID during the frame. Generally, the detailed information of a process trace is not available across multiple hardware servers 134 of a cloud system.

In the illustrated example, a process trace 310 shows information for two processes 312 and 314, although an actual process trace may include hundreds, thousands, or even millions of processes during a window of time. In some implementations, a process trace may be represented as a flame graph that shows multiple levels of events such as API calls, method calls, function calls, etc. For instance, the process trace may include a hierarchical or nested structure of events.

Additionally, the process trace 310 may include resource data 320 that indicates resource usage at one or more levels. For instance, the resource data 320 may include a thread execution time 322, allocated memory 324, and/or wait time 326. In some implementations, the resource data 320 may be available at a method level, namespace level, or class level.

The process trace 310 may be specific to a server 134. In an aspect, the call resource component 146 may correlate API calls 220 with the process trace 310 for one or more servers to determine resource data per API call. For instance, the call resource component 146 may find all API calls which were made during the window of time 230. The call resource component 146 may separate out API calls (example: APICall#1, APICall#2, APICall#3, etc.). The call resource component 146 may scope the process traces to APIs one-by-one. For an individual API call, the call resource component 146 may execute the following steps: 1) Determine the time the API call reached the cloud service 132 and the API call finished based on the service telemetry. 2) Determine which server process (i.e. PID of the process) the specific API call was executed on based on telemetry. 3) Determine the exact machine/server the API call was running on during that time based on telemetry. 4) Scope the process trace to the exact time that the API call was running on the machine/server. 5) Determine the resource usage on the machine/server during the time the API call was running. 6) Store the usage information for the API call. The call resource component 146 may repeat this process for each API call within the window of time 230.

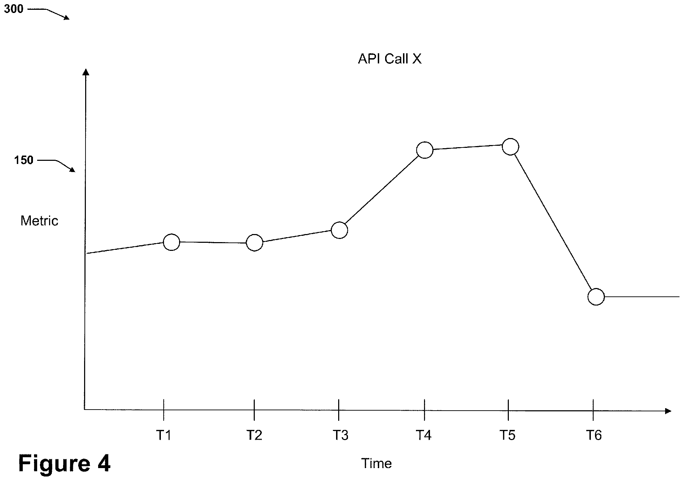

Figure 4 is an example graph of a resource usage metric for an API over time. The metric component 148 may generate the metric 150 for each window of time 230 based on the stored usage information for the API calls. The metric 150 may indicate an average value for all instances of an API call during the window of time 230. For example, the metric 150 may be CpuCycles, WaitDuration, Memory allocated, etc.

In the illustrated example, the metric 150 may be relatively consistent from time T1 - T3. There may be some variation in the metric 150 even if the implementation of the API call does not change. For example, The number or size of the requests in the API calls may vary. At T4, the metric may increase significantly, indicating a possible change in the implementation of the API call. For example, an event within the implementation such as another API call or a method may be updated. For instance, a common call to a database server may have been modified to collect additional data or perform additional processing of the data (e.g., for use in a different API call), which increases resource usage such as CPU cycles or memory allocation. In the illustrated example, the increased metric continues at time T5. In some implementations, the monitoring application 140 may initiate an action to reduce resource usage. For instance, the monitoring application 140 can be configured with rules that trigger alerts. As an example rule, an increase in the metric 150 by greater than a threshold percentage for more than a threshold number of window of time 230 may generate an alert. In some implementations, the monitoring application 140 may roll back a version of an internal API call to a previous version in response to an alert. At time T6, the metric 150 has significantly decreased. For example, an engineer may have investigated the previous increase in the metric, isolated an event at the method level, namespace level, or class level, and modified the implementation of the API call to avoid the event that increased the metric.

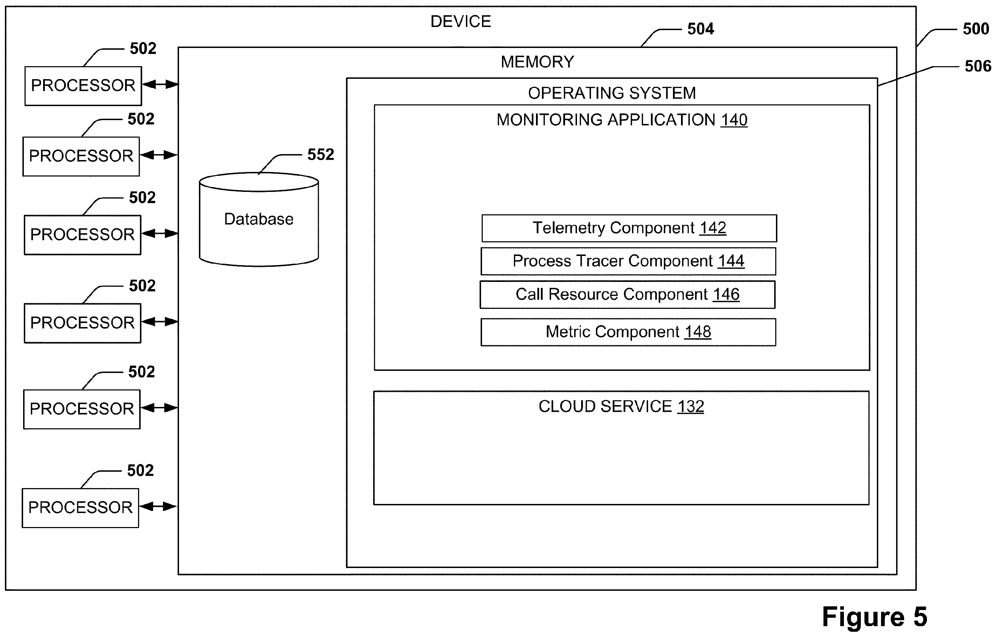

Figure 5 is a schematic diagram of an example of an apparatus 500 (e.g., a computing device) for generating resource usage metrics for API calls. The apparatus 500 may be implemented as one or more computing devices in the cloud network 120 such as a server 134 at a datacenter 130.

In an example, the apparatus 500 includes at least one processor 502 and a memory 504 configured to execute or store instructions or other parameters related to providing an operating system 506, which can execute one or more applications or processes, such as, but not limited to, the monitoring application140. For example, processors 502 and memory 504 may be separate components communicatively coupled by a bus (e.g., on a motherboard or other portion of a computing device, on an integrated circuit, such as a system on a chip (SoC), etc.), components integrated within one another (e.g., a processor 502 can include the memory 504 as an on-board component), and/or the like. Memory 504 may store instructions, parameters, data structures, etc. for use/execution by processor 502 to perform functions described herein. In some implementations, the memory 504 includes the database 552 for use by the cloud service 132 and/or the monitoring application 140.

In an example, the monitoring application 140 includes the telemetry component 142, the process tracer component 144, the call resource component 146, and the metric component 148.

In some implementations, the apparatus 500 is implemented as a distributed processing system, for example, with multiple processors 502 and memories 504 distributed across physical systems such as servers, virtual machines, or datacenters 130. For example, one or more of the components of the monitoring application 140 may be implemented as services executing at different servers 134 and/or different datacenters 130. The services may communicate via an API.

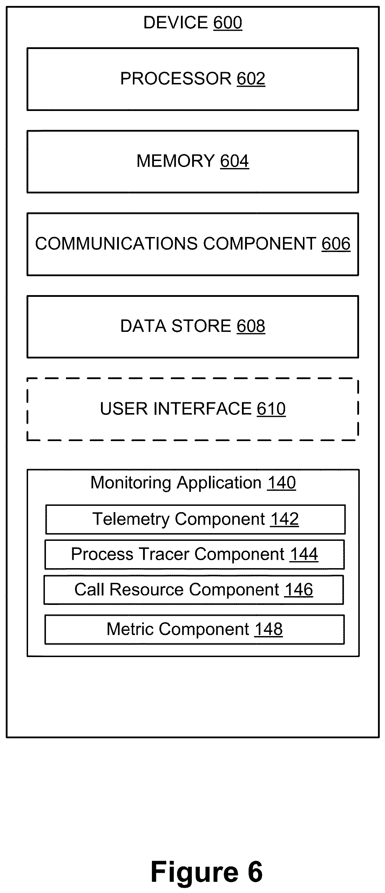

Figure 6 illustrates an example of a user device 600. The user device 600 may be an example of the device 110. In one aspect, device 600 includes processor 602, which may be similar to processor 502 for carrying out processing functions associated with one or more of components and functions described herein. For example, the user device 600 may allow a user 105 to access the monitoring application 140. For instance, the monitoring application 140 may include a client application that executes on the user device 600 and communicates with the datacenter 130. Processor 602 can include a single or multiple set of processors or multi-core processors. Moreover, processor 602 can be implemented as an integrated processing system and/or a distributed processing system.

Device 600 further includes memory 604, which may be similar to memory 504 such as for storing local versions of operating systems (or components thereof) and/or applications being executed by processor 602, such as the monitoring application140. Memory 604 can include a type of memory usable by a computer, such as random access memory (RAM), read only memory (ROM), tapes, magnetic discs, optical discs, volatile memory, non-volatile memory, and any combination thereof. The processor 602 may execute instructions stored on the memory 604 to cause the device 600 to perform the methods discussed below with respect to Figure 7.

Further, device 600 includes a communications component 606 that provides for establishing and maintaining communications with one or more other devices, parties, entities, etc. utilizing hardware, software, and services as described herein. Communications component 606 carries communications between components on device 600, as well as between device 600 and external devices, such as devices located across a communications network and/or devices serially or locally connected to device 600. For example, communications component 606 may include one or more buses, and may further include transmit chain components and receive chain components associated with a wireless or wired transmitter and receiver, respectively, operable for interfacing with external devices.

Additionally, device 600 may include a data store 608, which can be any suitable combination of hardware and/or software, that provides for mass storage of information, databases, and programs employed in connection with aspects described herein. For example, data store 608 may be or may include a data repository for operating systems (or components thereof), applications, related parameters, etc. not currently being executed by processor 602. In addition, data store 608 may be a data repository for the monitoring application 140.

Device 600 may optionally include a user interface component 610 operable to receive inputs from a user of device 600 and further operable to generate outputs for presentation to the user. User interface component 610 may include one or more input devices, including but not limited to a keyboard, a number pad, a mouse, a touch-sensitive display, a navigation key, a function key, a microphone, a voice recognition component, a gesture recognition component, a depth sensor, a gaze tracking sensor, a switch/button, any other mechanism capable of receiving an input from a user, or any combination thereof. Further, user interface component 610 may include one or more output devices, including but not limited to a display, a speaker, a haptic feedback mechanism, a printer, any other mechanism capable of presenting an output to a user, or any combination thereof.

Figure 7 is a flow diagram of an example of a method 700 for providing API expense visibility at each stack frame level. For example, the method 700 can be performed by the cloud network 120 (e.g., at a server 134), the apparatus 500 and/or one or more components thereof to provide metrics 150 to a user 105.

At block 710, the method 700 includes capturing a record of service telemetry for incoming API calls to a cloud service for a window of time. For example, in an aspect, apparatus 500, processor 502, memory 504, and/or monitoring application 140 may be configured to or may comprise means for capturing a record of service telemetry for incoming API calls to a cloud service for a window of time. For example, the monitoring application 140 and/or the telemetry component 142 may capture a record of service telemetry data 210 for incoming API calls 220 to a cloud service 132 for a window of time 230. In some implementations, the record of service telemetry includes a starting time stamp and a duration for each API call.

At block 720, the method 700 includes capturing a trace of processes running on at least one computer server that processes the API calls for the window of time. For example, in an aspect, apparatus 500, processor 502, memory 504, and/or process tracer component 144 may be configured to or may comprise means for capturing a trace of processes running on at least one computer server that processes the API calls for the window of time. For example, the process tracer component 144 may capture a process trace 310 running on at least one computer server 134 that processes the API calls 200 for the window of time 230. In some implementations, the trace of processes includes a call stack of multiple events and a thread execution time for each event. In some implementations, the trace of processes includes data for a plurality of frames during the window of time, the data indicating an activity of each PID during the frame.

At block 730, the method 700 includes determining, for each API call, a start time and a stop time of the API call, a server that executed the API call, and a PID associated with the API call. For example, in an aspect, apparatus 500, processor 502, memory 504, and/or the call resource component 146 may be configured to or may comprise means for determining, for each API call, a start time and a stop time of the API call, a server that executed the API call, and a PID associated with the API call. For example, the call resource component 146 may determine for each API call 220, a start time and a stop time of the API call, a server 134 that executed the API call, and a PID associated with the API call.

At block 740, the method 700 may optionally include storing a record of resource consumption for each of the incoming API calls. For example, in an aspect, apparatus 500, processor 502, memory 504, and/or call resource component 146 may be configured to or may comprise means for storing a record of resource consumption for each of the incoming API calls. For example, the call resource component 146 may store a record of resource consumption (e.g., resource data 320) for each of the incoming API calls 220 in the database 552. In some implementations, the resource data 320 is available at a method level, namespace level, or class level.

At block 750, the method 700 includes generating a metric of resource consumption for each API call based on the trace of processes for the PID associated with the API call. For example, in an aspect, apparatus 500, processor 502, memory 504, and/or metric component 148 may be configured to or may comprise means for generating a metric of resource consumption for each API call based on the trace of processes for the PID associated with the API call. For example, the metric component 148 may generate a metric 150 of resource consumption for each API call 220 based on the process trace 310 for the PID associated with the API call. In some implementations, the metric of resource consumption is available at a method level, namespace level, or class level.

At block 760, the method 700 may optionally include sampling the metric based on periodic windows of time. For example, in an aspect, apparatus 500, processor 502, memory 504, and/or the metric component 148 may be configured to or may comprise means for sampling the metric based on periodic windows of time. For example, the metric component 148 may periodically sample the metric based on periodic windows of time 230. In some implementations, a set of events within a call stack for an API call changes between the windows of time 230. Accordingly, the metric 150 may change significantly between the windows of time 230.

At block 770, the method 700 may optionally include outputting a graph of the metric over multiple windows of time. For example, in an aspect, apparatus 500, processor 502, memory 504, and/or the metric component 148 may be configured to or may comprise means for outputting a graph of the metric over multiple windows of time. For example, the metric component 148 may output the graph 400 of the metric 150 over multiple windows of time 230.

At block 780, the method 700 includes initiating an action to reduce resource usage. For example, in an aspect, apparatus 500, processor 502, memory 504, and/or the metric component 148 may be configured to or may comprise means for initiating an action to reduce resource usage . For instance, the monitoring application 140 can be configured with rules that trigger alerts. As an example rule, an increase in the metric 150 by greater than a threshold percentage for more than a threshold number of window of time 230 may generate an alert. In some implementations, the monitoring application 140 may roll back a version of an internal API call to a previous version in response to an alert. At time T6, the metric 150 has significantly decreased. For example, an engineer may have investigated the previous increase in the metric, isolated an event at the method level, namespace level, or class level, and modified the implementation of the API call to avoid the event that increased the metric.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, one or more of the functions described may be implemented in hardware, software, firmware, or any combination thereof. If implemented in software, the functions may be stored on or encoded as one or more computer-executable instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media. Non-transitory computer-readable media excludes transitory signals.

The following numbered clauses provide an overview of aspects of the present disclosure:
Clause 1. An apparatus comprising: one or more memories storing computer executable instructions; and one or more processors configured to execute the instructions to cause the apparatus to: capture a record of service telemetry for incoming application programming interface (API) calls to a cloud service for a window of time; capture a trace of processes running on at least one computer server that processes the API calls for the window of time, determine, for each API call, a start time and a stop time of the API call, a server that executed the API call, and a process identifier (PID) associated with the API call; generate a metric of resource consumption for each API call based on the trace of processes for the PID associated with the API call; and initiate an action to reduce resource usage.
Clause 2. The apparatus of clause 1, wherein the record of service telemetry includes time stamps of each API call and the associated PID of a respective process executing each API call.
Clause 3. The apparatus of clause 2, wherein the record of service telemetry includes a starting time stamp and a duration for each API call.
Clause 4. The apparatus of any of clauses 1-3, wherein the trace of processes includes a call stack of multiple events and a thread execution time for each event.
Clause 5. The apparatus of any of clauses 1-4, wherein the trace of processes includes data for a plurality of frames during the window of time, the data indicating an activity of each PID during the frame.
Clause 6. The apparatus of any of clauses 1-5, wherein the one or more processors, individually or in combination, are configured to: sampling the metric based on periodic windows of time; and output a graph of the metric over multiple windows of time.
Clause 7. The apparatus of clause 6, wherein a set of events within a call stack for an API call changes between the windows of time.
Clause 8. The apparatus of any of clauses 1-7, wherein the metric of resource consumption is available at a method level, namespace level, or class level.
Clause 9. The apparatus of any of clauses 1-8, further comprising storing a record of resource consumption for each of the incoming API calls.
Clause 10. A method comprising: capturing a record of service telemetry for incoming application programming interface (API) calls to a cloud service for a window of time; capturing a trace of processes running on at least one computer server that processes the API calls for the window of time, determining, for each API call, a start time and a stop time of the API call, a server that executed the API call, and a process identifier (PID) associated with the API call; generating a metric of resource consumption for each API call based on the trace of processes for the PID associated with the API call; and initiating an action to reduce resource usage.
Clause 11. The method of clause 10, wherein the record of service telemetry includes time stamps of each API call and the associated PID of a respective process executing each API call.
Clause 12. The method of clause 11, wherein the record of service telemetry includes a starting time stamp and a duration for each API call.
Clause 13. The method of any of clauses 10-12, wherein the trace of processes includes a call stack of multiple events and a thread execution time for each event.
Clause 14. The method of any of clauses 10-13, wherein the trace of processes includes data for a plurality of frames during the window of time, the data indicating an activity of each PID during the frame.
Clause 15. The method of any of clauses 10-14, further comprising sampling the metric based on periodic windows of time.
Clause 16. The method of clause 15, further comprising outputting a graph of the metric over multiple windows of time.
Clause 17. The method of clause 15, wherein a set of events within a call stack for an API call changes between the windows of time.
Clause 18. The method of any of clauses 10-17, wherein the metric of resource consumption is available at a method level, namespace level, or class level.
Clause 19. The method of any of clauses 10-18, further comprising storing a record of resource consumption for each of the incoming API calls.
Clause 20. An non-transitory computer-readable medium storing computer-executable instructions that, when executed by a processor, cause the processor to: capture a record of service telemetry for incoming application programming interface (API) calls to a cloud service for a window of time; capture a trace of processes running on at least one computer server that processes the API calls for the window of time, determine, for each API call, a start time and a stop time of the API call, a server that executed the API call, and a process identifier (PID) associated with the API call; generate a metric of resource consumption for each API call based on the trace of processes for the PID associated with the API call; and initiate an action to reduce resource usage.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described herein that are known or later come to be known to those of ordinary skill in the art are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A method (700) comprising:
capturing a record of service telemetry (210) for incoming application programming interface, API, calls (114) to a cloud service (132) for a window of time (230);
capturing a trace of processes (310) running on at least one computer server (134) that processes the API calls (114) for the window of time (230),
determining, for each API call (220), a start time (326) (230) and a stop time (230) of the API call (220), a server (134) that executed the API call (220), and a process identifier, PID, associated with the API call (220);
generating a metric (150) of resource consumption for each API call (220) based on the trace of processes (310) for the PID associated with the API call (220); and
initiating an action to reduce resource usage.

2. The method (700) of claim 1, wherein the record of service telemetry includes time (230) stamps of each API call (220) and the associated PID of a respective process executing each API call (220).

3. The method (700) of claim 1, wherein the record of service telemetry includes a starting time (230) stamp and a duration for each API call (220).

4. The method (700) of any preceding claim, wherein the trace of processes includes a call stack of multiple events and a thread execution time (322) for each event.

5. The method (700) of any of preceding claim, wherein the trace of processes includes data for a plurality of frames during the window of time (230), the data indicating an activity of each PID during the frame.

6. The method (700) of any preceding claim, further comprising sampling the metric (150) based on periodic windows of time (230).

7. The method (700) of claim 6, further comprising outputting a graph (400) of the metric (150) over multiple windows of time (230).

8. The method (700) of claim 6 or 7, wherein a set of events within a call stack for an API call (220) changes between the windows of time (230).

9. The method (700) of any preceding claim, wherein the metric (150) of resource consumption is available at a method (700) level, namespace level, or class level.

10. The method (700) of any preceding claim, further comprising storing a record of resource consumption for each of the incoming API calls (114).

11. A non-transitory computer-readable medium or media storing computer-executable instructions that, when executed by one or more processors (502), cause the one or more processors (502) to carry out the method of any preceding claim.

12. An apparatus (500) comprising:
one or more memories storing computer executable instructions; and
one or more processors configured to execute the instructions to cause the apparatus (500) to carry out the method of any of claims 1 to 10.
